Europäisches Patentamt

European Patent Office

Office européen des brevets

(19)

(11) Publication number: **0 408 117 A1**

# EUROPEAN PATENT APPLICATION

(21) Application number: 90201793.8

(22) Date of filing: 05.07.90

(51) Int. Cl.⁵: **F16J 15/34**

(30) Priority: 11.07.89 IT 2115589

(43) Date of publication of application:
**16.01.91 Bulletin 91/03**

(84) Designated Contracting States:
**AT BE CH DE DK ES FR GB GR LI LU NL SE**

(71) Applicant: **Berco S.p.A.**
**Via 1 Maggio 237**
**I-44034 Copparo Ferrara(IT)**

(72) Inventor: **Bisi, Ugo**
**Via Canapa 45**
**I-44100 Ferrara(IT)**

(74) Representative: **De Carli, Erberto et al**
**ING. BARZANO' & ZANARDO MILANO S.p.A.**
**Via Borgonuovo, 10 10**
**I-20121 Milano(IT)**

(54) Seal device between two mutually pivoted mechanical parts, in particular the crawler track links of tracked vehicles.

(57) Between two mechanical parts (11, 12) rotatably connected together by a pin (13) there is defined a chamber (15) housing a spacer (17) for the parts (11, 12) and a gasket (16) formed of an annular seal element (18) with a substantially J or L-shaped cross-section and an elastic annular pressing element (19) surrounding the seal element (18). The seal element (18) has at least its sealing portion (21) formed of a very hard material and also has a large sealing surface (30) which is mirror-machined. The hardness of the material and the large mirror surface prevent abrasive particles penetrating and conglomerating in the material of the seal element (18), thus preventing erosion of the mechanical part against which the seal element (18) acts, while ensuring a perfect hydraulic seal.

Fig.1

EP 0 408 117 A1

## SEAL DEVICE BETWEEN TWO MUTUALLY PIVOTED MECHANICAL PARTS, IN PARTICULAR THE CRAWLER TRACK LINKS OF TRACKED VEHICLES

This invention relates to a seal device between two mutually pivoted mechanical parts, in particular the crawler track links of tracked vehicles.

Generally the sealing methods used in these cases are such that the two mechanical parts and a pin which rotatably connects them together define an annular lubricant chamber housing coaxially a gasket and an element for spacing the parts, said gasket surrounding the spacer element, which itself surrounds the pin.

The gasket is composed of an annular seal element having a substantially cylindrical portion to which an essentially radial portion is connected to form a substantially J or L cross-section, and an elastic annular element externally embracing the seal element and arranged to press this latter into its sealing position.

The seal is achieved by a lip-shaped protuberance on the seal element, which acts against a radial sealing surface of one of the mechanical parts, and by the elastic element itself, compressed between the other mechanical part and the seal element.

A seal device of this type is described for example in Italian utility model No. 189250 of the same applicant.

In this type of seal, the elastic element is normally constructed of a very soft and deformable material, whereas the seal element is of relatively soft material such as synthetic polyurethane resin or nylon, with a very sharp seal lip to exert a consistent pressure against the radial surface on which it seals. The part against which the lip acts is generally of hardened steel. These methods generally provide good performance in terms of sealing against the lubricant, but if foreign material, particularly abrasive material, is present they tend to retain this material in the seal lip, so that with the movement of the contacting parts it tends to excavate the metal against which the seal element acts, so causing continuous erosion of the metal surface and considerably accelerating abnormal wear of the metal part. This results not only in deterioration of the sealing surface but also in a progressive loss of seal action in the region in question.

This effect is particularly felt in seals which have to operate under severe working conditions, such as in the case of crawler track links subject to rotary intermittent movement about the axis of their connection pin. In this respect, in such cases the gasket is continuously subjected to the external action of abrasive material such as earth, sand and the like.

The use of special seal lip profiles to prevent the tendency of the foreign material to penetrate into the seal region, or the use of more than one seal lip, has not solved the problem, which therefore remains even when such arrangements are used.

An object of the present invention is to remedy the problem of accelerated wear of the sealing surface on the mechanical part against which the yieldable seal element acts, by providing a seal device of the initially stated type which while maintaining the characteristics and advantages of known types in terms of the hydraulic seal, provides a considerably longer material and seal life, for equal utilization conditions, than the type currently generally available.

A further object of the invention is to provide a device which is simple to mount and is economical.

These objects are attained according to the present invention by a seal device between two mutually pivoted mechanical parts, in particular the crawler track links of tracked vehicles, in which the two mechanical parts and a pin which rotatably connects them together define an annular lubricant chamber housing coaxially an annular gasket and an element for spacing the parts, the gasket surrounding the spacer element, which itself surrounds the pin, and the gasket being composed of an annular seal element having a substantially cylindrical portion to which a substantially radial portion is connected to form a substantially J or L cross-section, and an elastic annular element externally embracing the seal element and arranged to press this latter into its sealing position against a radial surface of one of the two connected mechanical parts, characterised in that the seal element has at least its sealing part constructed of a very hard material and also has at least one mirror-machined, extended sealing surface.

In contrast to the known art, which generally uses as its seal element an element of relatively soft material with a small sealing surface formed by the end of the yieldable lip of the element, according to the present invention a seal element of very hard material and therefore non-deformable is proposed, with a large mirror-quality sealing surface.

The surface mirror quality and the considerable hardness of the sealing surface of the seal element advantageously prove extremely effective in opposing the aggression of the abrasive particles, which are unable to penetrate and collect within the hard material of the seal element, and in addition the extended surface by virtue of its considerable width compared with the usual surface of the seal lip of known devices, results in a considerable reduction in the depth of wear on the facing metal part.

The materials used for the seal element or at least its sealing portion can be die-cast or sintered metal carbide blends, ceramic materials, vitrified conglomerates or other equivalent materials. The advantage in terms of working life obtainable with the present invention is of the order of 50% more than the usual life of known types, whereas the lesser wear of the metal part means that the working life of this part increases by some 75%.

Because of the presence of the elastic element, the device of the invention not only demonstrates improved abrasion resistance characteristics but also maintains considerable axial and radial elasticity, which ensures a good seal even in the presence of the normal wear at the joint itself.

A further advantage of the invention is its ease of installation, involving no greater difficulty than in the case of known devices.

The characteristics and advantages of the invention will be more apparent from the description of one embodiment thereof given hereinafter by way of non-limiting example and illustrated in the accompanying drawings, in which:

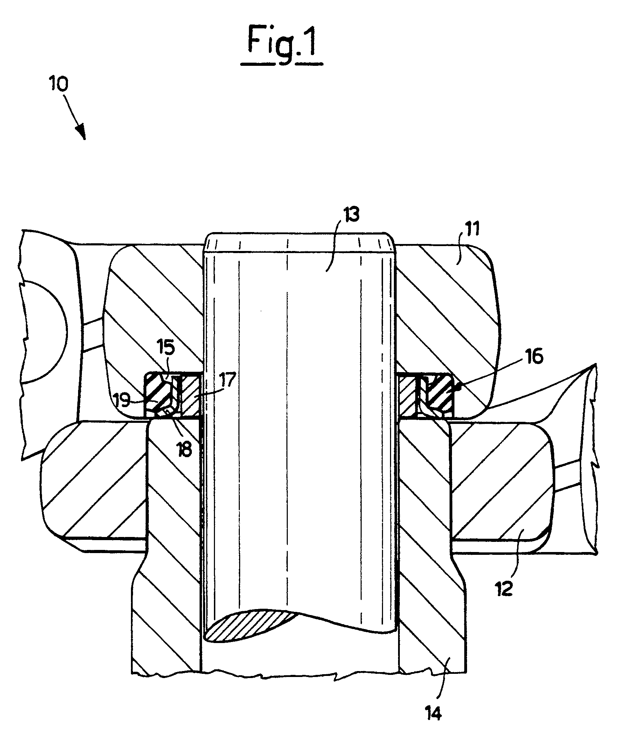

Figure 1 is a section through a seal device according to the invention, in which the pivoted parts represent two adjacent links of a crawler track;

Figure 2 is an enlarged detailed view of the sealing area and elements before the connection pin has been fully mounted;

Figure 3 is the same detailed view as Figure 2 but with mounting complete.

With reference to the drawings, in an articulated joint 10 between two mechanical parts 11, 12, for example of a track for crawler machines, these parts being pivoted by a pin 13 on the same axis, the part 11 is connected for example as an interference fit to the pin 13, whereas the part 12 is rotatably connected to the pin 13 via a bush 14, which is connected as an interference fit to the part 12 but is free to rotate on the pin 13.

An annular chamber 15 for the lubricant is defined between the two parts 11 and 12 and the pin 13, and coaxially houses an annular seal gasket indicated overall by 16, and a spacer 17. The gasket 16 surrounds the spacer element 17, which itself surrounds the pin 13.

The gasket 16 is formed in known manner by an annular seal element 18 and an annular elastic element 19. The seal element 18 comprises a substantially cylindrical portion 20 connected to a substantially radial portion 21 to define a substantially J or L- shaped cross-section.

The elastic element 19 surrounds the seal element 18 and preferably has a substantially trapezoidal cross-section. It is constructed of a very elastic or yieldable material and preferably has a large elastic memory. It comprises externally an axial surface 22 and radial surface 23 for sealing against a respective axial sealing surface 24 and radial sealing surface 25 of the annular chamber 15 formed in the part 11. The element 19 also comprises internally an axial surface 26 and a radial surface 27 for sealing against a respective axial surface 28 and radial surface 29 of the seal element 18.

The seal element 18 is constructed of abrasion resistant material, ie of a very hard material such as a die-cast or sintered metal carbide blend, ceramic material, vetrified conglomerates or other materials of similar properties.

The element 18 has a large sealing surface 30 cooperating with a sealing surface 31 on the bush 14 rigid with the part 12. The surface 30 is mirror-machined, to define with the surface 31, which is also smooth, a perfect hydraulic seal.

From the radially inner part of the surface 30 of the element 18 there extends an inclined or substantially conical surface 32 which connects to an inner cylindrical surface 33 of the element 18. The radial extension of the sealing surface 30 is preferably at least one quarter of the radial extension of the portion 21 of the seal element 18. Advantageously, at least the surface 28 but preferably also the surface 27 has a certain roughness or high coefficient of adherence, to improve the adherence of the elastic element 19 to the seal element 18.

On the radially outer part adjacent to the sealing surface 30, the seal element 18 comprises preferably a cylindrical surface 34 which extends at a right angle to the sealing surface 30.

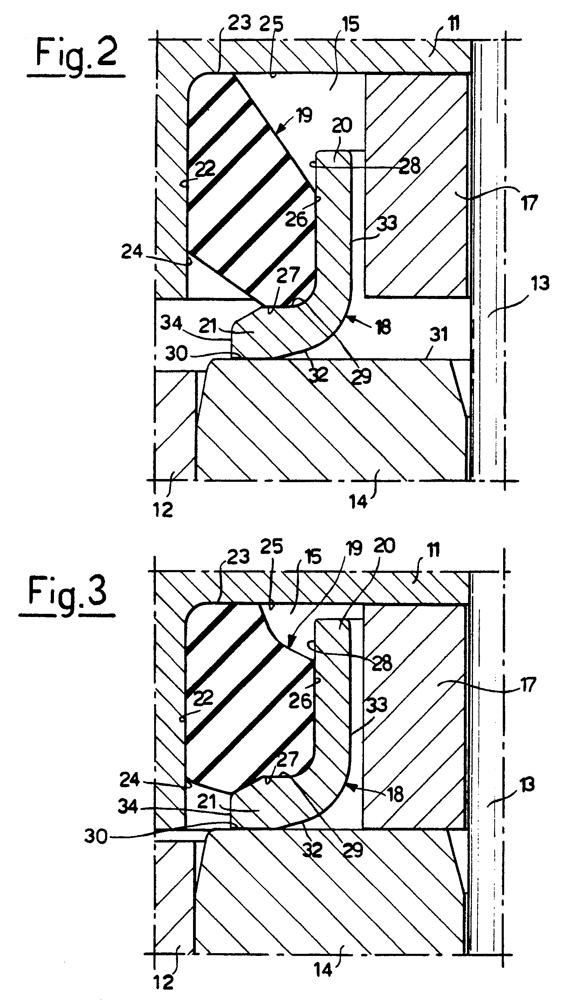

The system is installed in known manner, firstly mounting the bush 14 carrying the part 12 on the pin 13 and then inserting the spacer element 17, the seal element 18 and the elastic element 19. The part 11 is then mounted as an interference fit on the pin 13. During the initial stage of the assembly (Figure 2) the gasket 16 is in its rest position, with the elastic element 19 uncompressed and in its natural configuration.

As the assembly of the part 11 on the pin 13 continues, the gasket 16 is gradually brought into its sealing position, by which the elastic element 19 is progressively compressed to exert a compressive action against the seal element 18, particularly in the axial direction, until the final position shown in Figure 3 is reached. When in this position the deformed elastic element 19 seals between the part 11 (surfaces 22-25) and the seal element 18 (surfaces 26-29), and the seal element seals between the surfaces 30 and 31.

Because of the nature of the sealing surface 30 of the element 18, abrasive particles attempting to penetrate into the sealing area are effectively prevented from doing so by the resistance of the material to abrasion and deformation. It should be noted that such particles can only originate from that side which in Figures 2 and 3 is to the left of the element 18. In contrast, on the right side where the lubricant is located, the surface 30 ensures that the lubricant is retained within the chamber 15 in contact with the jointed parts 11, 12, the conical surface 32 facilitating the application of the lubricant as necessary for reducing wear. By virtue of the "memory" of the constituent material of the elastic ring 19, even with axial displacements of the connected parts and micro-yielding of the joint 10, the seal is always ensured.

Numerous modifications can be made to the invention without leaving its scope. For example, only a part of the seal element 18 could be made of hard material, namely the radially extending part. Again, the form of the seal element 18 could be such as to comprise two separate sealing surfaces of the same type as the surface 30.

## Claims

1. A seal device between two mutually pivoted mechanical parts, in particular the crawler track links of tracked vehicles, in which the two mechanical parts and a pin which rotatably connects them together define an annular lubricant chamber housing coaxially an annular gasket and an element for spacing the parts, the gasket surrounding the spacer element which itself surrounds the pin, and the gasket being composed of an annular seal element having a substantially cylindrical portion to which a substantially radial portion is connected to form a substantially J or L-shaped cross-section, and an elastic annular element externally embracing the seal element and arranged to press this latter into its sealing position against a radial surface of one of the two connected mechanical parts, characterised in that the seal element has at least its sealing part constructed of a very hard material and also has at least one mirror-machined, extended sealing surface.

2. A device as claimed in claim 1, characterised in that adjacent to said at least one sealing surface the seal element comprises on its radially inner side a substantially conical surface.

3. A device as claimed in claim 1 or 2, characterised in that adjacent to said at least one sealing surface the seal element comprises on its outer side a cylindrical surface extending at a right angle to the sealing surface.

4. A device as claimed in one of the preceding claims, characterised in that the seal element surface or surfaces which cooperate with the elastic element are surfaces of high coefficient of adherence.

5. A device as claimed in one of the preceding claims, characterised in that the elastic element has a substantially trapezoidal cross-section.

6. A device as claimed in one of the preceding claims, characterised in that the width of the sealing surface or surfaces of the seal element is of the order of at least one quarter of the radial dimension of the radial portion of the seal element.

7. A seal device between two mutually pivoted mechanical parts, substantially as described and illustrated.

# Fig.1

Fig.2

23 25    15    11

19
20
22
28
17
26
33
24
13
27
34 21    18
30    31
32    29
12    14

Fig.3

23 25  15  19 20    11

22
28
17
26
33
24
27
34 21    18
30    13
32    29
12    14

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-3469891 (DELI)<br>* column 4, lines 5 – 30 *<br>* column 3, lines 33 – 37; figures 7-9 * | <br><br>1, 3-5 | F16J15/34 |
| A | FR-A-2260732 (CATERPILLAR TRACTOR)<br>* page 4, lines 11 – 13 *<br>* page 5, lines 15 – 20; figures 1-3 * | <br><br>1-3, 6 | |

TECHNICAL FIELDS SEARCHED (Int. Cl.5 )

F16J

The present search report has been drawn up for all claims

| Place of search | Date of completion of the search | Examiner |
|---|---|---|
| THE HAGUE | 04 OCTOBER 1990 | NARMINIO A. |